(19) Europäisches Patentamt / European Patent Office / Office européen des brevets

(11) **EP 2 919 079 A2**

(12) **EUROPEAN PATENT APPLICATION**

(43) Date of publication:
**16.09.2015 Bulletin 2015/38**

(51) Int Cl.:
**G05B 17/02** (2006.01)　　**G05B 15/02** (2006.01)
**H02J 3/00** (2006.01)

(21) Application number: **15159163.3**

(22) Date of filing: **16.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **14.03.2014 IT MI20140411**

(71) Applicant: **Trillary S.r.l.**
**38017 Mezzolombardo (TN) (IT)**

(72) Inventors:
• **Gubert, Michele**
  **38017 MEZZOLOMBARDO TN (IT)**
• **Taglioni, Diego**
  **38017 MEZZOLOMBARDO TN (IT)**
• **Bernardini, Daniele**
  **38017 MEZZOLOMBARDO TN (IT)**
• **Bemporad, Alberto**
  **38017 MEZZOLOMBARDO TN (IT)**

(74) Representative: **Faggioni, Carlo Maria et al**
**Fumero S.r.l.**
**Pettenkoferstrasse 20/22**
**80336 München (DE)**

(54) **OPTIMIZATION AND CONTROL METHOD FOR A DISTRIBUTED MICRO-GENERATION ENERGY PLANT**

(57)　　A control method of a plant for the micro-generation of distributed energy is disclosed, wherein the plant is installed in a local unit, is connected to an electric network of an external supplier and comprises at least generation resources comprising of generators of electric and thermal energy, among which at least a co-generator in the form of fuel cell and photovoltaic panels, and energy storage resources, among which at least an electric battery and a thermal accumulator (boiler), wherein the following steps are provided:

acquiring status variables comprising at least an adjustment of said fuel cell ($M(k)$), a loading status of said battery ($S(k)$) and a status ($H(k)$) of said thermal accumulator,

chasing a time sequence (k=1, ...N) of reference values comprising at least, from an electric production from photovoltaic panels ($P_{FV}(k)$), an electric load ($L_{EL}(k)$) and a thermal load ($L_{TH}(k)$) demanded by a user, through a predictive model defined for minimising a cost function which includes a total electric power ($P_{EL}(k)$) and a total thermal power ($P_{TH}(k)$) produced by said generators of electric and thermal energy, so as to obtain a sequence of optimised variables, comprising at least adjustment/modulation of said fuel cell ($M_{REF}$), power delivered by said thermal accumulator $P_H(k)$ and a slack variable $\varepsilon(k)$ to be used as input variables for said fuel cell and said electric battery

and wherein said status variables ($M(k)$, $S(k)$, $H(k)$) are put in relationship with the relative input variables ($M_{REF}(k)$, $P_{BATT}(k)$) through discrete-time dynamic models defined as:

$$M(k+1) = e^{-\frac{T_s}{\tau}} M(k) + \left(1 - e^{-\frac{T_s}{\tau}}\right) M_{REF}(k)$$

$$S(k+1) = S(k) - k_s T_s P_{BATT}(k)$$

$$H(k+1) = e^{-l_H T_s} H(k) + \frac{k_H}{l_H}(e^{-l_H T_s} - 1)P_H(k)$$

where $T_s$ is a sampling time, $\tau$ is a time constant of said fuel cell, $k_s$ is a parameter of the loading and unloading dynamics of said electric battery, $k_H$ and $l_H$ are parameters of the dynamics of said thermal accumulator.

**Fig 1. Fuel cell integrated with heating system**

**Description**

Field of the Invention

The present invention relates to a method and control device thereof for a distributed micro-generation plant, in particular an energy micro-generation plant employing at least co-generation units with fuel cells and energy accumulators.

Background Art

As known, in recent years a progressive increase of distributed energy infrastructures has taken place, in particular infrastructures for electric energy production. Typically, the significant development of small independent power production plants for, for example with photovoltaic panels, falls within this type of approach.

Although the production and accumulation of concentrated energy may seem more effective in terms of scale economies, in actual fact it has been ascertained that a plurality of factors exists which tend to make a distributed infrastructure advantageous, so much so that the European Union has specifically developed economic policies aimed at reaching such goal. The advantages linked to distributed energy resources are to be considered in terms of market liberalisation, increased use of renewable resources (wind, geothermal, solar energy, ...), reduced impact on climate changes, reduction of the risks on investments, energy efficiency (smaller losses on distribution lines, cogeneration opportunities), diversification of the sources, energy independence and safety, and so on.

The large-scale diffusion of distributed energy resources implies a significant impact on the way of operation of the electric infrastructure, affecting energy production, distribution and consumption.

In particular, as long as energy consumption remains mixed, that is, partly from own production and partly coming from large suppliers, the delivery and distribution system implies a certain complexity also, both from a construction point of view and from an operational point of view. In particular, a residential system with distributed resources can be envisaged: it will be able to operate more independently from the external power supplier, but makes it necessary to set up new contract and trade policies, which take into account the specific ability to generate and locally accumulate energy.

As a matter of fact, electric energy can be produced locally (precisely in a distributed manner), through fuel cells/batteries (hence with heat cogeneration processes), photovoltaic cells and wind generators, then accumulated and/or used up and/or distributed, in association or not with other thermal energy generators, such as conventional boilers, geothermal probes, solar panels, cogeneration with fuel cells and so on. This complexity of resources, each with an own efficiency factor which also depends on other external variables (for example environmental conditions), must be carefully coordinated and controlled, in order for the overall system efficiency to remain at levels which make the distributed system advantageous over the conventional one.

Control devices for units/hubs of distributed energy resources are already known in the sector. In particular, these devices are conceived to manage the individual units within a wider network, where in any case significant mutual energy exchanges occur. In substance, the network of the central supplier of electric energy is used as energy distribution buffer among multiple units, so as to compensate any local energy overproductions or underproductions. This approach necessarily derives from a low controllability of local energy generators/accumulators, but makes control management (energy sale/purchase methods from/to the central supplier strongly affect system economics) more complex. In substance, the controller must optimise the operation of the various components/resources, in order to reach a certain goal shared at general level.

In the document "M. Houwing, R. R. Negenborn, P. W. Heijnen, B. De Schutter, and H. Hellendoorn, "Least-cost model predictive control of residential energy resources when applying μCHP," Proceedings of Power Tech 2007, Lausanne, Switzerland, 6 pp., July 2007. *Paper 291*"*, a control mode of a micro-generation plant is disclosed, in particular a so-called energy and heat cogeneration unit (μCHP) for residential use. This document illustrates a plant, connected to the power grid (from which it receives or to which it can deliver electric energy), wherein a cogeneration unit is provided, consisting of a fuel cell (based on Stirling technology), associated with a conventional boiler and with electric accumulators (batteries) and thermal accumulators (boilers). The unit hence produces and uses electric and thermal energy, also interacting with the electric network of a central external supplier. For the control logic of this residential plant, it is suggested to use a model predictive control approach. In particular, the MPC-based controller manages the operation of a mini-infrastructure in the network (micro grid) consisting of μCHP generators and of both electric and thermal accumulator devices. This system is arranged so as to exchange significant amounts of energy with the external supplier's electric grid, participating in the electric market: hence the optimisation of the predictive model is focused on maximising the profit of the individual distributed units. Moreover, as mentioned above, this solution resorts to a compensation grid, causing the μCHP cogenerator engine to work exclusively with a full load or with a partial load: this implies that the optimisation problem comprises discrete variables (that is, the two operation conditions of the cogenerator) and requires a complex solver for MILP programming (mixed integer linear programming), which requires more time to be solved.

Such known controller hence arises in a highly specific context, viceversa proving inadequate in the cases in which the units of distributed resources are conceived to not significantly interact with the central supplier's electric energy grid.

In the publication "Michèle Arnold, Rudy R. Negenborn, Göran Andersson and Bart De Schutter, Model-Based Predictive Control Applied to Multi-Carrier Energy Systems, Presented at the IEEE PES General Meeting 2009, Calgary, Canada, 2009" an MPC-based control scheme is proposed again for the optimisation of multiple hubs with distributed energy resources. The control system calculates set points for each hub, exploiting a global model of the different hubs. An important modelling of the energy exchange grids which connect the various hubs is furthermore proposed, for the purpose - as seen above - of obtaining significant energy compensations throughout the various hubs through the grid. The optimisation purpose is to minimise generation costs, under the constraint of meeting consumption demands, assuming to know exactly both energy prices and the user's load during the prediction horizon. The problem of optimising the control system is of a non-linear type, hence it is solved in general only locally, without having a global convergence guarantee, especially in the presence of disturbances with respect to the ideal forecasts assumed in the system.

In the publication "Michêle Arnold, Göran Andersson, Model Predictive Control of Energy Storage including Uncertain Forecasts, Presented at the 17th Power Systems Computation Conference, Stockholm, Sweden, 2011" a system similar to the previous one is disclosed, wherein the forecasts on energy prices and on the user's load are no longer considered exact, but subject to uncertainty (disturbances). The optimisation object is again that of entering in the supplier's grid a certain amount of energy at each time interval, determined on the day before by a higher-level optimisation.

US2012/0072040, US2014/0012427 and US2013/0190938 disclose other optimisation systems of distributed energy production units, connected in a power grid and a communication grid.

These known control systems, as said, have been developed to have a significant energy exchange with the central supplier's electric grid (so-called smart grids), as well as to control energy generators between discrete operation conditions. However, they are inadequate or excessively burdensome from a computational point of view, especially with respect to the cases in which the individual unit plant does not provide significant energy exchanges with the external grid and can resort to generators with variable operation with greater continuity.

Summary of the Invention

The object of the present invention is hence that of providing a control system, based on predictive models (MPC), which is more effective and inexpensive compared to the prior-art systems, since it is mainly used with units of distributed energy resources in which the external electric grid acts simply as energy supplier.

This object is achieved through the features mentioned in the independent claim herewith attached. The dependent claims disclose preferential features of the invention.

Brief Description of the Drawings

Further features and advantages of the invention are in any case more evident from the following detailed description of preferred embodiments, given purely as a non-limiting example and illustrated in the attached drawings, wherein:

fig. 1 is a schematic view of an exemplifying cogeneration unit;
fig. 2 is a diagram showing a comparison between the features of some fuel cells;
fig. 3 is a schematic view of an exemplifying hybrid unit for the production and storage of electric energy; and
figs. 4 and 5 are diagrams showing two possible modellings of the behaviour of a photovoltaic panel.

Detailed Description of Preferred Embodiments

Let us consider an infrastructure containing a plurality of energy resources (production and storage) included in a local distribution micro grid, which we are going to refer to in the following as distributed unit or hub. The distributed unit is typically installed in a residential complex (detached house, condominium, small residential estate, ...) or industrial complex (manufacturing warehouse, barracks, ...) and is connected to a distribution grid of a central supplier's energy source, for example a supplier of electric energy, from which it receives electric energy at will.

The central supplier's electric grid, in theory, can act as further energy exchange infrastructure, in which the distributed unit represents a junction in which energy exchanges potentially occur in the two directions (with the resulting accounting credits/debits): however, in the present dissertation this aspect will be deliberately neglected, because it is not wished to involve the central supplier's grid in the energy balance considerations, but rather only as an answer to the electric energy demand from the distributed unit.

The distributed unit comprises a plurality of energy generators, in particular at least a $\mu$CHP micro-cogenerator

and a conventional boiler and/or photovoltaic panels and/or geothermal probes and/or wind generators, as well as electric and/or thermal accumulators.

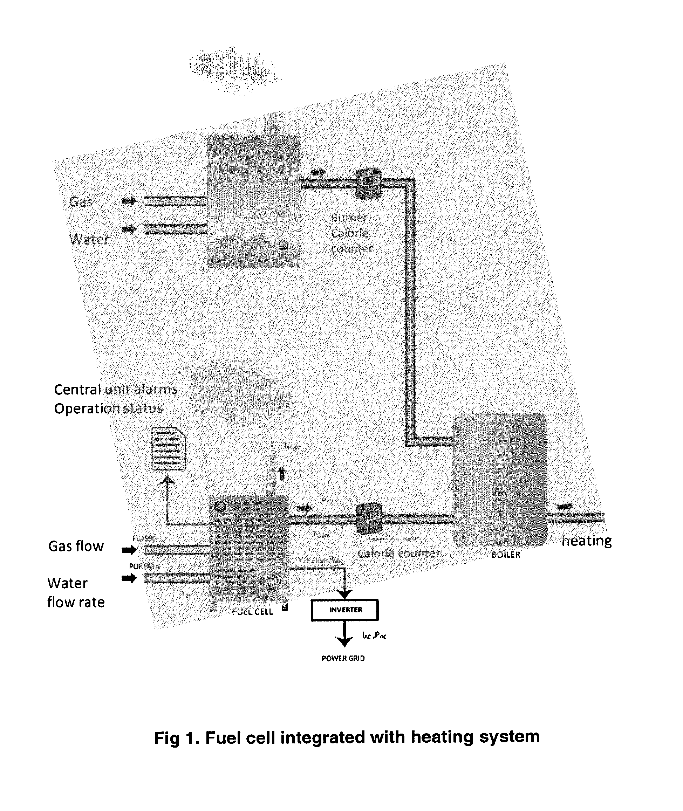

Preferably, the micro-cogenerator is in the shape of a fuel cell (associated with the sanitary and heating hot water plant, as shown in fig. 1), for example a solid-oxide fuel cell manufactured by Sofcpower SpA. For such purpose, the distributed unit is also connected to an external supplier's appropriate fuel source, typically methane gas. The conventional boiler runs with methane gas or other similar fuel gas.

Therefore, as also illustrated in fig. 1, the distributed unit receives a fuel from an external source for the micro-cogenerator and a fuel for the conventional burner, which fuels are advantageously identical and coincide with methane gas.

Primarily, the fuel-cell micro-cogenerator, through known methane-gas-splitting technology, produces heat and electric energy in continuous current: the heat may be transferred to a (running or stored) water mass, while the electric energy may be stored in a battery and then used by users in the grid of the unit, through conversion into alternated current operated by an inverter. In the present context, it is wished that also this electric energy be fundamentally meant for self-consumption.

The conventional burner and the fuel cell are furthermore supplied with water through a shared hydraulic circuit, so as to supply heat both to a closed heating circuit and - through a heat exchanger - to sanitary water. In such respect, an additional accumulator of thermal energy may be provided in the form of a hot-water boiler, for example.

Alternatively to this embodiment, it is possible to provide that the conventional burner be fully replaced by one or more further fuel cells, for example three fuel cells arranged in series. This solution is typically adopted for newly built buildings/plants, where a conventional boiler is not already present.

Cogeneration of thermal and electric energy can make advantageous the use of heating systems aided by a heat pump, wherein use is made of an inverted refrigerating cycle using the electric energy produced.

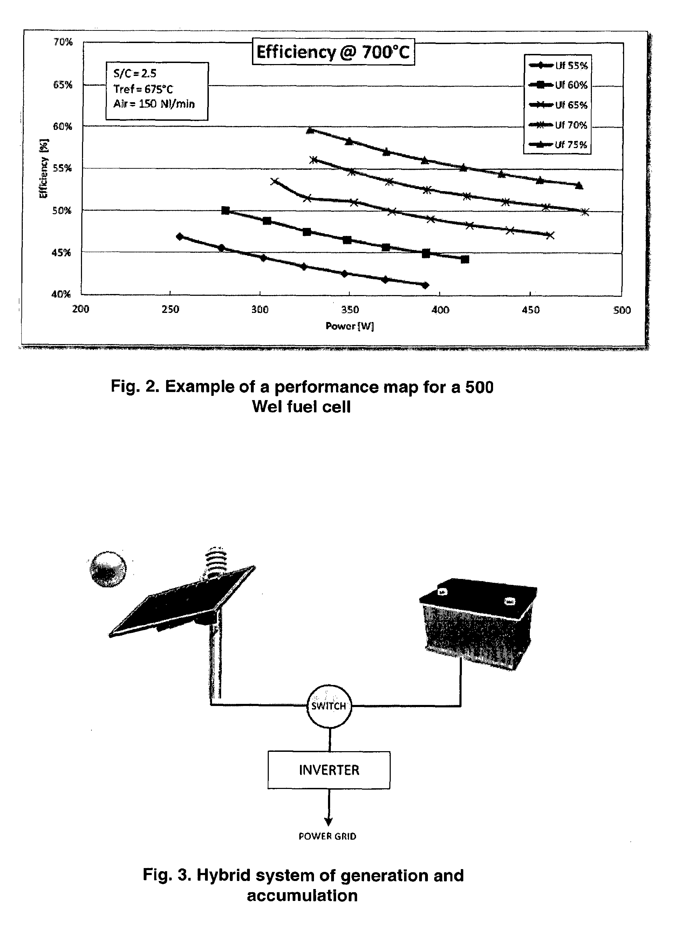

According to a preferred embodiment, a hybrid production of electric energy is provided, hence partly from cogeneration and partly from photovoltaic panels, stored in suitable batteries, for example nickel-chloride molten salt batteries (for example the SoNick™ model produced by Fiamm S.p.A.), see also fig. 3.

In order for the various energy resources of the distributed unit to always be able to operate efficiently, meeting the local energy consumption demands in cooperation with the electric energy supplied by the central supplier's external grid, it is necessary to have a suitable control device (called "local energy manager").

The control device has the parameters and the operation features of the individual energy resources (fuel-cell co-generator, boiler, photovoltaic panels, electric storage batteries, ...) and receives information on current consumptions, so as to integrate these data and suitably drive the resources, taking into account the energy costs of each source, including the central supplier's external electric grid (energy market prices, for example, in Italy, the Prezzo Unico Nazionale (National Single Price) of the Gestore dei Servizi Energetici (Energy Service Manager) GSE S.p.A).

In other words, the local energy manager is a locally installed hardware and software device which allows to efficiently and adjustedly manage the production and consumption systems of electric energy and heating within the micro-grid of the distributed unit.

It can be considered a "local operator subject" for the management of production schedules, which adjusts the activity of fuel battery generators, photovoltaic inverters, electrical and/or thermal storage applications according to the trend of the user's energy demand and to the trend of seasonal temperatures. The management at local operator level can be carried out automatically, due to a certain number of preset algorithms, possibly depending on manual settings linked to the specific requirements.

It is furthermore provided that a series of local energy managers, each one assigned to a distributed unit, are coordinated by a supervisor controller, possibly located in a remote position, in which control policies can also be remodulated or reconfigured (for example based on energy cost, on the seasonal climate trend, or other ...), which are then delivered to the individual local control devices.

It is hence provided that the controller must monitor a series of parameters of energy resources and act on a series of controls of the same resources, in order to be able to implement the control logic thereof.

With reference to the exemplifying situation illustrated in fig. 1, a fuel-cell co-generation SOFC plant manufactured by SOFCpower SpA is considered, even though the majority of the parameters is nevertheless of interest also for other products belonging to the same technology family. The parameters to be monitored are described in detail in the following Table 1: they give indications on the resources used by the cell (fuel, water), on the energy produced, and on the operation regime of the co-generation unit (where analogical values means continuous values, by contrast to binary, on/off-type values):

**Table 1. List of parameters to be monitored for a fuel cell**

| Parameter | Description | Values |
|---|---|---|
| GAS INPUT | Incoming gas flow to the cell measured by the cell-integrated probe | Analogic, from cell PLC |
| FLOW RATE | Flow rate of the incoming water to the cell, value acquired by the central unit | Analogic, from cell PLC |
| $V_{DC}$ | Voltage delivered by the cell | Analogic, from cell PLC |
| $I_{DC}$ | Current delivered by the cell | Analogic, from cell PLC |
| $P_{DC}$ | Electric power delivered by the cell *stack* (in direct current) | Analogic, from cell PLC |
| $P_{AC}$ | Electric power delivered by the inverter (in alternated current) | Analogic, from cell PLC |
| $P_{TH}$ | Delivered thermal power, calculated by $T_{IN}$, $T_{MAN}$ and by the water flow rate value | Analogic, calculated |
| OPERATION STATUS | It identifies the operation mode of the fuel cell. The statuses are preset in the control central unit. | 1 - Full load (maximum delivery) |
| | | 2 - Half load (delivery at 50%) |
| | | 3- Standby (minimum delivery of electric and thermal energy) |
| | | 4 - Shutdown |

In the following table 2 some significant controls on which the control device can act are instead listed.

**Table 2. List of controls for a fuel cell**

| Control | Description | Values |
|---|---|---|
| GAS VALVE | Gas valve adjustment for controlling the incoming flow to the cell | Analogic in the cell PLC |
| $I_{AC}$ | Outgoing current modulation from the inverter. | Analogic in the cell PLC |
| OPERATION STATUS | It sets the operation status of the fuel cell between a plurality of preset configurations (electric and thermal part self-adjust) | 1 - Full load (maximum delivery) |
| | | 2 - Half load (delivery at 50%) |
| | | 3- Standby (minimum delivery of electric and thermal energy) |
| | | 4 - Shutdown |

In substance, the control device can act on a series of controls (Table 2) for managing the delivery of the electric and thermal power from the fuel cell. In particular, the cell operation regime can be set according to a plurality of preset statuses, in addition to carrying out a fine tuning exploiting the control of the incoming gas flow and the outgoing current modulation from the inverter. Advantageously, when the cell is completely operational (that is, when it is not in the shutdown phase) it can be modulated continuously, from the full operation status (100% of the deliverable power) to a minimum value approximately equal to 30% of the full operation and corresponding to the standby status. The continuous modulation allows to avoid the use of a mixed-integer solver in the control system. From the management unit onboard the fuel cell (as well as onboard the other energy resources) some alarm signals can also be acquired, which identify abnormal or critical operating conditions.

In order to adequately monitor the performance and the efficiency of the individual resource (for example the co-generation micro unit) and overall of the interaction between the various resources, other parameters are acquired in different positions of the plant and/or of the unit distribution grid: the underlying Table reports this parameter category.

**Table 3. Parameters monitored at plant level**

| Parameter | Description | Values |
|---|---|---|
| $T_{MAN}$ | Supply temperature (outgoing water temperature from the cell and input water to the boiler) | Analogic, from cell PLC |
| $T_{ACC}$ | Storage temperature (temperature of the water stored in the boiler) | Analogic, from temperature probes (ex. PT100) |
| Cell calorie counter | Value measured by the calorie counter positioned on the cell supply pipe | Analogic |
| $T_{IN}$ (optional) | Temperature of incoming cold water to the cell | Analogic, from cell PLC |
| $T_{FUMI}$ (optional) | Temperature of outgoing exhaust gases from the cell | Analogic, from cell PLC |
| Boiler calorie counter | Value measured by the calorie counter positioned on the boiler supply pipe | Analogic |
| Gas counter | Value taken by the gas meter | Analogic |
| Electric smart meter | | Analogic |

Similar considerations can be made for the different energy resources (production, storage, consumption) existing in the micro-grid of the distributed unit, determining a significant number of parameters to be monitored (acquired) and of controls on which to act (actuations).

In the control device hardware components known per se are installed, as well as a software platform in which the control logic and the transfer channels of the acquisition and control signals are implemented.

Should the control device represent the mode of a more extended network, under the control of a control centre, the software platform is conceived with client/server logic. In particular, for the monitoring and remote control of the modes, information must be taken from remote control devices and stored in a server at the control centre: thereby, the data relating to the status of all resources can be made available to the *clients* connected to the system. The interaction between the control centre and the modes of the micro-generation grid must necessarily be bidirectional so as to allow the sending of controls to remote apparatuses.

In such case, the software platform provides the management of a database, the size of which is proportional to the number of modes potentially controllable by the central manager and to the frequency with which the resources of the remote sites are updated. In any case the architecture used must be scalable, so as to take into account scenarios in which there is a constant increase of the number of distributed micro-generation sites.

Access to the information relating to the resources monitored in the individual distributed units and the management of all supervision and control operations is provided also in a decentralised manner, through standard personal computers or mobile terminals (tablets and smartphones) connected to the Internet network.

The amount of information which is caused to travel in the network depends on the complexity of the micro-generation site, that is, on the number of monitored resources. Three main events can be identified to which a data exchange on the network results, between the control centre and the remote mode of the control network:

- a substantial part of the network-generated traffic is due to the status updates which the mode gateways of the *smart grid* periodically carry out by sending the data to the control centre (such event may also be asynchronous following requests coming from the control centre);

- data transmission may also occur spontaneously from the gateway in the case of one or more alarms arising; in this case a buffer of alarm signals is created before the transmission thereof, since usually the arising of an alarm generates others like a cascade; a maximum buffer size (usually of 32 alarms) and a timeout (usually around 10 sec) before the spontaneous sending of data is preferably established;

- a further event which occupies the communication channel between grid mode and control centre is the sending of a control towards a remote co-generation site (for example for modulating the operating regime of a co-generation unit); the sending of a control generates also a full update procedure of the status of the resources.

The main events which generate traffic on the network are listed in the following Table 4, in which a quantitative estimate on the amount of data associated with each event is also reported:

**Table 4. Information sent on the network in correspondence of the main events**

| Event | Type | Amount of data |
|---|---|---|
| Full update of the status of resources | Synchronous or asynchronous on request of the control centre | 20 bytes per transmission and acknowledgement Variable amount of information based on the resources monitored with the addition of 100 bytes of fixed overhead (max 500 bytes overall) |
| Spontaneous sending of alarms | Asynchronous upon a spontaneous sending by the remote site gateway | 100 bytes for transmission overhead 10 bytes for each alarm with the addition of 50 bytes of fixed overhead. Transmission upon the filling of a buffer of 32 alarms or at the expiry of a timeout (changeable 10s) |
| Sending of a remote | Asynchronous upon a | 25 bytes per transmission |
| control | control executed in the control centre | and acknowledgement Variable amount of information based on the resources monitored with the addition of 100 bytes of fixed overhead (max 500 bytes overall) |

The update of the data relating to the status of each mode is performed in two ways:

- asynchronously, following a request made by the central system;
- synchronously, at preset intervals which may be set in the system in which the gateway of the distributed unit spontaneously sends an update.

The second way is used in prevalence and is the one which generates a greater amount of traffic in the network. The controls are of an intrinsically asynchronous nature and are sent only following specific events, which make a change of the status delivery of electric and thermal power by the energy resources necessary. The typical time range for the status update of a mode towards the central system, in a situation of standard plant management, can be set at 5 minutes. In the cases in which the system must manage special plant modulation events, it is necessary to use a data update frequency of up to 1 second. A typical frequency with which modulation controls are sent to the fuel cells is in the order of 5-10 events per day. The majority of the requests or of the controls do not need special timeliness in being executed; however, there may be events (requests by the GSE or the distributor to discontinue energy delivery, possible power cut forecasts,...) which require fast times in the execution of status changes: in such situations, the statuses of the modes are updated in the way characterised by the highest frequency.

The communication network architecture must provide that the distributed modes transmit and receive data with the remote central units for purposes linked to monitoring and remote control activities. In the typical system installation contexts, ADSL connectivity is presumably available; in the remote control system, however, the opportunity of using a secondary backup channel must be provided, on GPRS/UMTS network, should the main connection via ADSL be interrupted.

The software platform (distributed on the communication network) is configured for supporting the following functions:

- recording the statuses of the resources and of the occurred changes;
- sending controls to the actuators, both manually and under the supervision of an automatic control algorithm;
- memorising and managing the status history of each resource;
- allowing the graphic visualisation of the trends of the physical quantities of interest (consumptions, energy production, current put into the network, etc..);
- promptly viewing the alarm signals, which must preferably be sent to operators via sms, email or automatic telephone calls;
- geolocalise information

but especially the implementation of the original control algorithms of the energy resources, for the implementation of the management policies of energy production based on the parameters outside the system.

With reference to this last issue, the control device operates modulating, in a coordinated and constrained manner (based on the operation features), available generators and accumulators, through a specific real-time optimisation algorithm.

In particular, according to the invention, the control device is configured to define a control logic according to a predictive model (MPC) which optimises the control variables so as to maximise self-consumption within the micro-grid of the individual distributed unit, that is, in other words, to minimise a cost function of the energy acquired from the outside.

Such decision algorithm must: *(i)* acquire information from the telecommunication system on the current status of the plants and of the network; *(ii)* formulate and solve an optimal control problem which controls the generators in order to obtain the desired profile of energy; *(iii)* transmit the calculated decision signals to the telecommunication network for broadcasting to the local energy managers. The decider algorithm must furthermore be executed periodically, with a sampling time adequate for permitting the input into the network of the desired energy amount, with sufficient precision to allow the chasing of the provided user loading profiles.

Preferably, it is suitable to acquire also parameters and historical data series concerning the smart grid, the electric grid and consumers. Some of such data can be considered static, or known beforehand, and it is necessary for them to be available *offline,* before system turning on; others are instead dynamic measurements and signals, which must be updated and communicated to the decider *online,* that is, at each sampling time. The required data are detailed in the following, distinct by type.

(a) *offline* required data

- Models of the controllable devices: static mathematic models (input-output) and dynamic mathematic models (in status space) which describe the dynamic behaviour of the considered generators and accumulators.
- Constraints on the controllable devices: static constraints which express operation plant limits, such as for example the maximum and minimum production of the $\mu$CHP, any ramp-up and ramp-down constraints, starting and shut-down times, minimum and maximum allowed loading status for the accumulators and so on.

(b) *online* required data

- Dynamic constraints imposed by local loads: thermal and electrical loads which must be met on each grid mode.
- Forecast data on photovoltaic panels: forecast of the amount of energy produced by each photovoltaic panel in the current sampling interval.
- Operativity signals of the electric grid modes: at each sampling time it is necessary to acquire information relating to the energy produced by each generator, the energy consumed by each load, the modulation of each $\mu$CHP plant, the load status of each accumulator, and finally the operation status of each plant (in order to identify faults or malfunctionings).

The problem addressed in the algorithm implemented in the control device according to the invention has all continuous variables, hence it can be formulated as a quadratic programming problem (QP). Furthermore, as already mentioned, it is not provided to input energy into the external supplier's electric grid, hence the optimisation process tends to draw as little energy as possible from the external grid (minimisation of the costs related to the acquisition of external energy), exploiting as much as possible the energy produced by local resources (self-consumption), in particular the $\mu$CHP with the help of the electric storage battery. Moreover, upstream of the optimisation, according to the invention a consumption estimator is provided which can provide an estimate of consumptions during the day, based on actual consumption data and on historical consumption information of the distributed unit.

The definition of the control algorithm preliminarily implies the modelling of the energy resources available in the distributed units. This operation is not banal at all and may significantly affect control method effectiveness, solution convergence and the overall resulting energy efficiency. The modelling of each resource is preferably conceived specifically based on which other resources interface in the micro-grid to which that resource belongs: for this reason, in the following preferred modellings will be provided in the context of two different micro-grid configurations.

In the following considerations, $R$ refers to the set of real numbers, $R_+$ refers to the set of positive real numbers, $R_{0+}$ refers to the set of non-negative real numbers, $Z$ refers to the set of integer numbers, and $Z_{0+}$ refers to the set of non-negative integer numbers; $t \in R_{0+}$ refers to the continuous-time time index, while $k \in Z_{0+}$ refers to the discrete-time one; given a signal $x(t)$ $\dot{x}(t) = \frac{dx}{dt}$ refers to the derivative of $x(t)$ with respect to time.

Model of fuel cell conventional boiler

In the first example, a fuel cell integrated in a conventional boiler thermal plant is considered (fig. 1). The cell is provided with an own central unit responsible for the monitoring of the device and for the delivery of alarm signals in case of failures or malfunctionings; such central unit integrates a PLC controller which suitably modulates the flow of fuel gas (natural gas or GPL, depending on the particular installation) and the generated continuous current in order to obtain the desired instant power; the optimisation algorithm of the invention is meant to interface directly with the central unit mounted on each cell, delegating to the PLC the low-level control of the device.

The modulation of the fuel cell, referred to as **M(t)**, is conventionally divided into 4 *operation statuses:*

1. OFF, **M(t) = 0.**
2. STAND-BY, **M(t) = 0.3.**
3. PARTIAL LOAD, **M(t) = 0.5.**
4. FULL LOAD, **M(t) = 1.**

The STAND-BY status, in which the energy produced is roughly equal to the one consumed, is useful for short periods of time in which it is not wished to turn off the device to avoid the long shut-down and subsequent start-up times. The time necessary for going from STAND-BY to FULL LOAD is about 10 minutes. Even though modulation usually occurs according to these four discrete statuses, it is preferable to consider modulations in a continuous range of values, from STAND-BY to FULL LOAD. This function is technically achievable by the PLC which manages the device operations and is hence considered available for the control algorithm according to the invention, so that it has available all the analogical (that is, continuous) parameters: hence, in the following, it is assumed $M(t) \in$ **[0,1]**.

The cell *start-up* phase, corresponding to the transition **M(t) = 0 → 0.3**, occurs in the arc of a few hours and is necessary for bringing the system to the operating conditions. In this step no electric power is delivered nor is it possible to modulate power delivery. Moreover, electric energy and fuel gas are used. Starting times and gas consumption vary depending on cell size: from about 3 hours and 5 *kWh*, respectively, for a **1 *kWel*** cell, to about 6 hours and **10 *kWh*** for a **2.5 *kWel*** cell. For the *shut-down* step (inverted transition, **M(t) = 03 → 0**) similar considerations apply, except for the fact that in this step no gas is used. The *shut-down* is usually managed by the control PLC (in case of planned *shut-down*) or by the safety PLC (in case of emergency *shut-down*).

The cell interfaces with a thermal storage (hot-water boiler). The amount of heat exchanged between cell and storage is measured by a calorie counter. A virtually constant ratio exists between the electric power supplied by the cell and the corresponding thermal power. Depending on the technology used, this ratio is usually 1 to 0.9 or 1 to 1.8: for each kilowatt of electric energy produced there will be about 0.9 (or 1.8) thermal kilowatt. In other words, the heat exchange between cell and boiler is constant, once the electric/thermal ratio has been set, referred to as $C_{TH}$. The exchanged power can be hence represented with a static model. The relationship between the cell-delivered electric power and temperature is instead subject to a non-negligible dynamic, due to the fact that the same temperature change is obtained with different amounts of energy, depending on the starting temperature. It has been considered advantageous to use a power model, both regarding thermal storage and the user's side load.

The operation costs of the fuel cell are essentially two: the cost of fuel gas and of electric consumption, given by the cell current and by fan supply. Given the relatively short sampling interval provided (in the order of 5-15 minutes), it is not necessary to model the change of the gas price in real time and to develop forecast algorithms; it is sufficient to maintain the current gas price constant in the prediction horizon.

The main difficulty in the modelling of fuel cells operation lies in the fact that no easily identifiable standard dynamic models are available. Each device has different dynamics depending on its technical features, on the technology it is based on and on the changing environmental conditions. Cell efficiency $\eta$ depending on instant power $P_{EL}$ and on *fuel utilization* $U_f$ is described by a specific performance map (fig. 2). *Fuel utilization* $U_f$ is defined as the ratio between the fuel used by the electrochemical reaction of the cell and the total amount of incoming fuel; this ratio varies also depending on the outside temperature and on pressure; however, in first approximation it can be considered constant for a given cell. The efficiency curves reported in fig. 2 show how the maximum efficiency is for high $U_f$ and for an electric power value varying between 50% and 70% of the nominal power (in the exemplifying case shown, 500 W). Having set the value of $U_f$, maximum efficiency decreases upon the increase of the delivered electric power. Given the difficulty in modelling the changes of $U_f$ over time and the relatively high frequency with which measurements are collected, it is believed useful to consider efficiency constant during prediction, and possibly identifiable recursively in real-time starting from the observed measurements.

The thermal storage system is defined by a simple model based on the incoming and outgoing power flows to the storage device (boiler), conceptually equivalent to a battery for electric storage. The water stored in the tank is heated by the thermal power supplied by the fuel battery, $P_{TH}(t)$, and by the one supplied by the boiler, $P_B(t)$, and cooled by the power demanded by the user, $L_{TH}(t)$. Furthermore $P_H(t)$ is defined as the thermal power delivered by the accumulator, and $H(t) \in$ **[0,1]** is defined as the stored heat, where $H(t) = 0$ represents the fully unloaded accumulator and $H(t) = 1$ the fully loaded accumulator.

The dynamic evolution of the heat stored in the accumulator can then be described by

$$H(0) \quad = \quad H_0$$

$$\dot{H}(t) \quad = \quad -K_H P_H(t) - L_H H(t)$$

where $H_O$ represents the heat stored initially in the tank, $K_H$ is a coefficient which models the time constant of the loading and unloading dynamics of the accumulator and $L_H$ is a parameter which serves to estimate heat losses through the tank walls.

In particular, time constant $K_H$ is obtained as the inverse of the tank storage capacity. Such capacity $C_B$ in *kWh* is given by

$$C_B = mc(T_{max} - T_{min})$$

where *m* is the water mass in the tank, *c=0.001163 kWh/kgK* is the specific heat of water (assumed to be constant), and $T_{min}$, $T_{max}$ are the minimum and maximum water temperature, respectively. Assuming a cylindrical tank having radius *r* and height *h*, and replacing $m = 10^3 \pi r^2 h$, it is obtained

$$K_H = \frac{1}{10^3 \cdot 3600 \cdot \pi r^2 hc(T_{max} - T_{min})}$$

The thermal losses from the tank walls $L_B(t)$ in *kW* can be calculated depending essentially on the water temperature $T_{hot}(t)$, on the temperature of the surrounding environment $T_{cold}(t)$, on the surface of tank *A* and on the insulation coefficient of tank *R*. In particular, the relationship

$$L_B(t) = \frac{A}{R}(T_{hot}(t) - T_{cold}(t))$$

applies. Replacing $A = 2\pi r(r + h)$, it is obtained

$$L_B(t) = \frac{2\pi r}{R}(r + h)(T_{hot}(t) - T_{cold}(t))$$

In a layered storage tank, the temperature $T_{hot}(t)$ can be approximated with the average temperature of the water stored. This model is simplified, expressing $L_B(t)$ as a function of the energy stored in the tank $H(t)$, so as to obtain a linear model useful for the formulation of the optimisation algorithm. For such purpose it is assumed $T_{cold}(t) = T_{min}$ and $T_{hot}(t) \in [T_{min}, T_{max}]$; as a result, thermal loss is given by

$$L_B(t) = \tilde{L}_B H(t)$$

where

$$\tilde{L}_B = \frac{2\pi r}{R}(r + h)(T_{max} - T_{min})$$

represents the maximum loss obtained when the tank is at the maximum of the capacity thereof. Hence, the dynamics of the thermal energy stored in the tank and due to the sole losses is

$$\dot{H}(t) \quad = \quad -L_H H(t)$$

where

$$L_H = \frac{\tilde{L}_B}{3600 C_B} = \frac{2(r+h)}{3600 \cdot 10^3 r h c R}$$

It is assumed to be able to measure the water temperature in the tank to be able to estimate the value of $H(t)$ at any required time instant.

The balance of the thermal powers, assuming that the load demanded by the user is always met, is described by the relationship

$$L_{TH}(t) = P_{TH}(t) + P_H(t) + P_B(t)$$

According to a preferred control method of the fuel cell, it is wished to minimise boiler use, which boiler must be started only when the available thermal power (the one stored in the accumulator plus the one supplied by the cell) is not sufficient to meet the user's demand; this result is obtained by setting the power delivered by the accumulator as follows

$$P_H(t) = \begin{cases} L_{TH}(t) - P_{TH}(t) & se \quad (L_{TH}(t) \geq P_{TH}(t) \wedge H(t) > 0) \vee (L_{TH}(t) < P_{TH}(t) \wedge H(t) < 1) \\ 0 & se \quad (L_{TH}(t) \geq P_{TH}(t) \wedge H(t) = 0) \vee (L_{TH}(t) < P_{TH}(t) \wedge H(t) = 1) \end{cases}$$

and the power delivered by the boiler as

$$P_B(t) = \max\{L_{TH}(t) - P_{TH}(t) - P_H(t), 0\}$$

That ensures that the boiler be turned on only when necessary. It is possible to enter tolerance thresholds in the previous equation, so as to avoid too frequent start-ups and turn-offs of the boiler.

It must furthermore be noticed that it is sufficient to set $H_0 = K_H = L_H = 0$ should hot water storage not be available. In this case $P_H(t) = 0$ and the power delivered by the boiler is defined by the constraint

$$P_B(t) = \max\{L_{TH}(t) - P_{TH}(t), 0\}$$

In the following Table 5 the parameters for the thermal accumulator are reported.

**Table 5 - Model parameters for the thermal accumulator**

| Parameter | Description | Value | Unit of measurement |
|---|---|---|---|
| $C$ | Water-specific heat | 0.001163 | kWh/kgK |
| $r$ | Tank radius | variable | m |
| $h$ | Tank height | variable | m |
| $R$ | Tank insulation coefficient | variable | $m^2K/kW$ |
| $T_{min}$ | Water minimum temperature | [300,320] | K |
| $T_{max}$ | Water maximum temperature | [350,360] | K |
| $K_H$ | Parameter for storage dynamics | $\dfrac{2.7778 \cdot 10^{-7}}{\pi r^2 h c (T_{max} - T_{min})}$ | $s^{-1}$ |
| $L_H$ | Parameter for thermal losses | $\dfrac{5.5556 \cdot 10^{-7}(r+h)}{r h c R}$ | $s^{-1}$ |

In the light of the above considerations, the continuous-time dynamic model of the fuel cell integrated with a thermal plant is defined by a non-linear system, which takes into account the different time constants relating to the various operating steps.

In particular, should the cell be turned on (ON), that is $M(t) \in [0.3,1]$, it is obtained

$$\dot{M}(t) = K_{ON} \, \text{sign}(M_{REF}(t) - M(t))$$

$$P_{EL}(t) = \eta P_{EL,max} M(t)$$

$$P_{TH}(t) = \eta P_{EL,max} C_{TH} M(t)$$

where $M_{REF}(t) \in \{0\} \cup [0.3,1]$ is the required modulation, $M(t)$ is the actual modulation, $P_{EL}(t)$ is the delivered electric power, $P_{TH}(t)$ is the thermal power and $\eta$ is efficiency. The function **sign(x)** is defined as

$$\text{sign}(x) = \begin{cases} 1 & se \ x > 0 \\ 0 & se \ x = 0 \\ -1 & se \ x < 0 \end{cases}$$

Parameter $K_{ON} = \dfrac{1-0.3}{600} = 0.0012$ represents the system time constant, obtained considering that it takes 10 minutes to go from $M(t) = 0.3$ to $M(t) = 1$, while $P_{EL,max}$ is the maximum nominal power of the cell *[kW]* corresponding to full load and $C_{TH}$ is the electric/thermal ratio of the apparatus.

Should the cell be turned off (OFF) and ready for start-up, that is $M(t) = 0$, it is obtained

$$\dot{M}(t) = K_{OFF} \, \text{sign}(M_{REF}(t))$$

$$P_{EL}(t) = 0$$

$$P_{TH}(t) = 0$$

where $K_{OFF} = \dfrac{0.3}{T_{UP}}$ and $T_{UP} = 7200(P_{EL,max} + 0.5)$ is the time necessary for a *start-up* or *shut-down step* (about 3 hours for a $P_{EL,max} = 1 \ kW$ cell and about 6 hours for a $P_{EL,max} = 2.5 \ kW$ cell).

Finally, considering the case $M \in (0,0.3)$, if the cell is being started up, we have

$$\dot{M}(t) = K_{OFF}$$

$$P_{EL}(t) = 0$$

$$P_{TH}(t) = 0$$

while if the cell is being shut-down we obtain

$$\dot{M}(t) = -K_{OFF}$$

$$P_{EL}(t) = 0$$

$$P_{TH}(t) = 0$$

The parameters set forth above for the fuel cell are summed up in the following Table 6.

**Table 6 - Model parameters for the fuel cell**

| Parameter | Description | Value | Quantity Unit |
|---|---|---|---|
| $P_{EL,max}$ | Maximum nominal power | [1, 2.5] | kW |
| $K_{ON}$ | Model parameter in the case $M(t) \geq 0.3$ | 0.0012 | $s^{-1}$ |
| $K_{OFF}$ | Model parameter in the case $M(t) < 0.3$ | 0.3/ $T_{OFF}$ | $s^{-1}$ |
| $T_{UP}$ | Time required for start-up or shut-down | $7200(P_{EL,max} + 0.5)$ | s |
| $C_{TH}$ | Electric/thermal ratio | [0.9, 1.8] | 1 |
| $\eta$ | Efficiency | variable | 1 |

Model of photovoltaic panels/electric accumulator

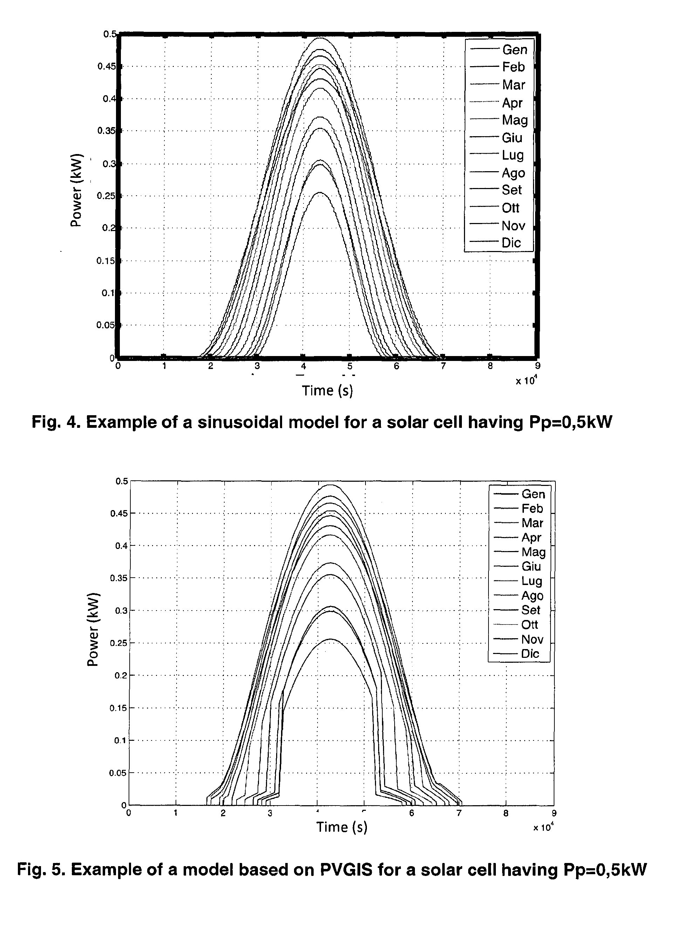

In a second example a hybrid system is considered consisting of photovoltaic panels connected through a switch (or splitter) to an electric accumulator consisting of batteries with molten sodium chloride-nickel salts (fig. 3).
The local control device, coordinated with the software platform of the central decider, must exploit the available storage capacity to maximise self-consumption, storing energy depending on the user's demand and on energy price fluctuations.
The energy produced by the photovoltaic panels, not being controllable, is treated as an exogenous disturbance acting on the system. The measurements of such disturbance may be used to build predictive, deterministic or stocastic models, which serve to estimate energy production in a given future time range. Starting from a series of historic data and applying clustering and scenario-generating algorithms, it is possible to build estimates of likelihood of disturbance, setting the complexity of the model so as to obtain the desired compromise between provision accuracy and computational load.
Should there be absence or insufficiency of local historical data, energy generation from photovoltaic panels is simulated using artificial models, sinusoidal (fig. 4) or PVGIS-based (fig. 5) ones, respectively.

*Sinusoidal model*

The daily diagram of photovoltaic generation on an ideal, clear-sky day is described in an approximate manner by the following formula:

$$P_{FV}(t) = \begin{cases} 0.5 P_p \left(1 - \cos\left(\frac{2\pi(t - t_1)}{t_2 - t_1}\right)\right) & se\, t \in [t_1, t_2] \\ 0 & altrimenti \end{cases}$$

where $P_{FV}(t)$ is the instant power depending on time, $P_p$ is the peak power **[kW]**, and $t_1$, $t_2$ are the time instants relating to sunrise and sunset, respectively. This model is easily implementable since it requires to know only the peak power and the sunrise and sunset times, but does not take into account other factors such as the technical features of the panel or the geographical location thereof.

*PVGIS-based model*

More accurate predictive models can be obtained due to the help of the interactive maps of the Photovoltaic Geographical Information System (PVGIS). This tool gives the estimate of the daily energy production of a panel and the trend of solar radiation during the day, depending on a number of parameters (panel position and orientation, technology used, peak power, any losses). By suitably combining these data, it is possible to obtain an estimate of the instant power delivered by a panel during the day. The example shown in the drawings is calculated considering a photovoltaic panel located in the centre of Trento, Italy.

The electric accumulator considered consists of a series of sodium chloride-nickel batteries, conventionally called Z.E.B.R.A. (*Zero Emission Battery Research Activity*). This type of battery consists of an assembly of hot-operating cells, connected in series or in parallel and enclosed in a thermal container. Each cell operates at a temperature of 270°C or higher, up to 350°C, and has a tension of 2.35 V. During the loading step the salt (NaCl) and the nickel (Ni) turn into nickel chloride (NiCl$_2$) and sodium (Na), while the unloading step occurs through the opposite transformation. No further chemical reactions being involved, the efficiency of such batteries in terms of capacity is very high. The high internal temperatures cause thermal losses but offer remarkable advantages, such as the opportunity of simple and effective cooling, and performances and lifetime virtually independent from room temperature.

The model exemplified in the following refers to an electric accumulator consisting of a number $N_b$ of standard Z.E.B.R.A. batteries, each one having a capacity $C = 20$ *kWh*. The overall capacity of the accumulator is referred to as $C_{TOT} = 20 N_b$. $S(t)$ is the loading status of the batteries at the time t, where $S(t) = 1$ shows a fully loaded device and $S(t) = 0$ a fully unloaded one. In normal operating conditions, it is assumed that the loading status may freely vary between the minimum $S_{min} = 0.2$ and the maximum $S_{max} = 1$ without this limiting the life cycle of the batteries nor significantly altering the performances thereof. Furthermore, the loading and unloading operations can be considered symmetrical, with equal time constants, and imply negligible running costs: the dispersed heat is reconverted into energy with an efficiency close to 100%. When the battery is in stand-by, instead, there is a thermal loss $L$ quantifiable in about 90 W, equal to 2.16 *kWh* a day. That implies an overall thermal loss for the accumulator equal to $L_{TOT} = 90 N_b$. $P_{EL}(t)$ is the power associated with the accumulator, where positive values $P_{EL}(t) > 0$ indicate delivered power (unloading step) and negative values $P_{EL}(t) < 0$ indicate absorbed power (loading step). In fast-loading mode, it is possible to load from $S_{min}$ to $S_{max}$ a Z.E.B.R.A. battery having $C = 20$ *kWh* in about $\Delta T = 4500$ seconds. Therefrom it can be deduced that the maximum absorbable power by the accumulator is

$$P_{EL,min} = -3600 \frac{\Delta S}{\Delta T} C_{TOT} = -12.8 N_b$$

where $\Delta S = S_{max} - S_{min}$ is the load change obtained in the time $\Delta T$. Since loading and unloading times are assumed to be equal, the maximum power which can be delivered by the accumulator is defined as

$$P_{EL,max} = -P_{EL,min}$$

Taking into consideration the thermal losses which are obtained in stand-by, the dynamic evolution of the loading status of the continuous-time accumulator may be described by a system similar in portions

$$\dot{S}(t) = \begin{cases} -K_S L_{TOT} & \text{se } P_{EL}(t) = 0 \\ -K_S P_{EL}(t) & \text{altrimenti} \end{cases}$$

where $K_S = 1/(3600\, C_{TOT})$. Such model is subject to the constraints described previously in connection with the loading status, $S_{min} \leq S(t) \leq S_{max}$, and with the minimum and maximum power, $P_{EL,min} \leq P_{EL}(t) \leq P_{EL,max}$. Moreover, if the incoming energy to the battery for the loading step cannot be taken from the grid, but must only be supplied by the photovoltaic panel, then it is necessary to impose the further constraint

$$P_{EL}(t) \geq -P_{FV}(t).$$

Finally, it is useful to ensure that there is no energy delivered by the battery in excess, imposing

$$P_{EL}(t) \leq L_{EL}(t) - P_{FV}(t),$$

where $L_{EL}(t)$ is the electric load demanded by the user.

The model parameters for the electric accumulator are summed up in the following table 7.

**Table 7 - Model parameters for the electric accumulator**

| Parameter | Description | Value | Unit of measurement |
|---|---|---|---|
| $C$ | Capacity of the individual battery | 20 | $kWh$ |
| $L$ | Thermal loss of the individual battery | 0.09 | $kW$ |
| $C_{TOT}$ | Total capacity of the accumulator | $20\,N_b$ | $kWh$ |
| $L_{TOT}$ | Total thermal loss of the accumulator | $0.09\,N_b$ | $kW$ |
| $K_S$ | Model coefficient for the accumulator | $1/(3600\,C_{TOT})$ | $s^{-1}kW^{-1}$ |
| $P_{EL,min}$ | Maximum power absorbed by the accumulator | $-12.8\,N_b$ | $kW$ |
| $P_{EL,max}$ | Maximum power delivered by the accumulator | $12.8\,N_b$ | $kW$ |
| $S_{min}$ | Minimum admissible loading status | 0.2 | 1 |
| $S_{max}$ | Maximum admissible loading status | 1 | 1 |

Combining the models described above for a photovoltaic panel and an electric accumulator, the overall dynamic model of this example can be expressed in continuous time in the following form:

$$\dot{S}(t) \quad = \quad \begin{cases} -K_S L_{TOT} & \text{se } P_{EL}(t) = 0 \\ -K_S P_{EL}(t) & \text{altrimenti} \end{cases}$$

$$P_{OUT}(t) \quad = \quad P_{EL}(t) + P_{FV}(t)$$

where $P_{OUT}(t)$ is the power in $kW$ delivered to the grid by the mode at the time $t$. Sampling such system with sampling time $T_s$, the following discrete-time model is obtained:

$$S(k+1) \quad = \quad \begin{cases} S(k) - K_S T_s L_{TOT} & \text{se } P_{EL}(k) = 0 \\ S(k) - K_S T_s P_{EL}(k) & \text{altrimenti} \end{cases}$$

$$P_{OUT}(k) \quad = \quad P_{EL}(k) + P_{FV}(k)$$

Photovoltaic panels/electric accumulator/fuel cell/conventional burner model

Here in the following a formulation of the predictive control problem is described according to a preferred embodiment of the invention, that is, in the case in which it is considered to have available a fuel cell, a solar panel connected to an electric battery, a thermal accumulator and a burner (non controllable in first approximation).

The control action is aimed at determining the adjustable inputs, that is, substantially the adjustment (modulation) of the fuel cell $M_{REF}$ and the power delivered by the electric battery $P_{BATT}$, in such a manner as to chase a time sequence of reference values at least of the electric and thermal load ($L_{EL}$ and $L_{TH}$, respectively), respecting the operativity constraints, seen also above, which the various devices and energy resources are subject to, such as the fuel cell, the electric battery and the thermal accumulator.

For such control action, according to the invention it is assumed to have available a sequence of predictive values of (i) electric production from photovoltaic panels $P_{FV}(k)$, of (ii) electric consumption $L_{EL}(k)$ and (iii) thermal consumption $L_{TH}(k)$ by the user (estimate of the user's demand, obtained based on the most recent measurements, considered as the user's actual demand within the optimisation process), where $k$ is the time index, with $k = 1....,N$. Such values are used as reference values to be kept pace through the controlled variation of total electric power $P_{EL}(k)$ and thermal power $P_{TH}(k)$ produced by the considered generators. When formalising the control, it is assumed that the photovoltaic panel is always connected to the grid: in case it is detached or deactivated, $P_{FV}(k) = 0 \; \forall k$ will have to be imposed.

The definition of the predictive control is based on a discrete-time dynamic model of the considered plant. $S(k)$ indicates the loading status of the electric battery, while $H(k)$ indicates the status (in percentage terms of available thermal power with respect to the maximum thermal power which can be accumulated) of the thermal accumulator, and $M(k)$ indicates the adjustment (modulation) of the fuel cell.

In order to solve the optimisation problem, it is acted on the reference adjustment (modulation) $M_{REF}(k)$ of the fuel cell and on the power delivered by the electric battery $P_{BATT}(k)$ (where, conventionally, negative values of $P_{BATT}(k)$ indicate the absorbed power).

According to a preferred variant, further reference values are considered a specific loading status $S_{REF}$ and a specific status of the thermal accumulator $H_{REF}$, the chasing of which is a possible secondary objective of the optimisation.

Further optimisation variables are given by the power delivered by the thermal accumulator $P_H(k)$ and by a slack variable $\varepsilon(k)$ introduced in the optimisation problem. $P_H(k)$ represents the support thermal power, supplied mainly by the burner (but also by the fuel cell), which serves to cause the user's thermal power request to always be met (whenever possible). The slack variable $\varepsilon(k)$ is introduced in the optimisation problem to cause the constraint on the meeting of the thermal demand to be imposed as *soft* constraint, that is, constraint violations are allowed on condition that such violations are penalised in a cost function (see further on) which must be minimised.

The status variables $M(k)$, $S(k)$, $H(k)$ are put in relation with the entries $M_{REF}(k)$, $P_{BATT}(k)$, $P_H$ through dynamic discrete-time models. In the formulation of the invention, such models are defined as:

$$M(k+1) = e^{-\frac{T_s}{\tau}}M(k) + \left(1 - e^{-\frac{T_s}{\tau}}\right)M_{REF}(k)$$

$$S(k+1) = S(k) - k_s T_s P_{BATT}(k)$$

$$H(k+1) = e^{-l_H T_s}H(k) + \frac{k_H}{l_H}(e^{-l_H T_s} - 1)P_H(k)$$

where $T_s$ is the sampling time, T is a parameter which represents the fuel cell time constant, $k_S$ is a parameter which defines the loading and unloading dynamics of the electric battery, $k_H$ and $l_H$ are parameters which define the dynamics of the thermal accumulator. Moreover, the total electric power and the thermal power which must meet the user's demand are defined as:

$$P_{EL}(k) = \eta M(k) + P_{BATT}(k) + P_{FV}(k)$$

$$P_{TH}(k) = c\eta M(k) + P_H(k) + \varepsilon$$

where $\eta$ and $c$ are normalisation factors: in particular $\eta$ is a scale factor which converts the adjustment (modulation) of the fuel cell (which has a value from 0 to 1) into delivered electric power, while c is another scale factor which serves to convert the thermal power supplied by the fuel cell into the corresponding normalised thermal power.

It must furthermore be noted that the considered generators and accumulators are subject to functional constraints, which must be taken into account in the formulation of the predictive control problem. In particular, the adjustment of the fuel cell can be made in an interval ranging between $M_{REF,MIN}$ and $M_{REF,MAX}$, where $M_{REF,MIN}$ usually lies around 30% and $M_{REF,MAX}$ is 100%; the electric battery has constraints both on the loading status - which must range between $S_{MIN}$ and $S_{MAX}$ - and on the maximum instantly absorbed and delivered power, indicated as $P_{BATT,MIN}$ and $P_{BATT,MAX}$, respectively; similarly, the instant thermal power absorbed and delivered by the thermal accumulator must be constrained in the range between $P_{H,MIN}$ and $P_{H,max}$.

It must finally be considered that, once the dynamic models of interest and the cost function to be minimised (see here below) have been defined, the performances of the control method depend also on a series of fine tuning parameters. In particular, $N > 0$ defines the prediction horizon, that is, the future time window in which the evolution of the controlled system is predicted; moreover, the non-negative scalar quantities $q_{EL}$, $q_{TH}$, $q_S$, $q_H$, $q_s$ are capable of defining the relative weight of the various terms which make up the cost function.

With the variables and the parameters just described, it is possible to formulate the predictive control problem according to the invention, as a minimisation calculation of a cost function, that is, as follows (where k represents the discrete-time index):

$$min \sum_{k=1}^{N} \left( q_{EL}\left(P_{EL}(k) - L_{EL}(k)\right)^2 + q_{TH}\left(P_{TH}(k) - L_{TH}(k)\right)^2 + q_S(S(k) - S_{REF}(k))^2 + q_H(H(k) - H_{REF}(k))^2 + q_\varepsilon\epsilon(k)^2 \right)$$

s.t.

$$M(k+1) = e^{-\frac{T_s}{\tau}}M(k) + \left(1 - e^{-\frac{T_s}{\tau}}\right)M_{REF}(k)$$

$$S(k+1) = S(k) - k_s T_s P_{BATT}(k)$$

$$H(k+1) = e^{-l_H T_s}H(k) + \frac{k_H}{l_H}(e^{-l_H T_s} - 1)P_H(k)$$

$$P_{EL}(k) = \eta M(k) + P_{BATT}(k) + P_{FV}(k)$$

$$P_{TH}(k) = c\eta M(k) + P_H(k) + \varepsilon$$

$$P_H(k) = L_{TH}(k) - c\eta M(k)$$

$$P_{BATT,MIN} \le P_{BATT}(k) \le P_{BATT,MAX}$$

$$S_{MIN} \le S(k) \le S_{MAX}$$

$$P_{BATT}(k) \ge P_{FV}(k)$$

$$0 \le H(k) \le 1$$

$$M_{REF,MIN} \le M_{REF}(k) \le M_{REF,MAX}$$

$$P_{H,MIN} \le P_H(k) \le P_{H,MAX}$$

$$\forall k = 0, \dots, N-1.$$

The control method thus formulated represents a quadratic programming problem (QP), which hence, from the numerical point of view, can then be solved with standard QP solvers.

In substance, the control method according to the invention provides to execute and repeat the following steps, with periodicity equal to sampling time $T_s$:

a. acquiring the value $S(k)$ of the loading status of the electric battery, of the status $H(k)$ of the thermal accumulator and of the current adjustment of the fuel cell $M(k)$, as well as the forecast value $P_{FV}(k)$ of the electric production from photovoltaic panels, the forecast value of the electric load $L_{EL}(k)$ and of the thermal load $L_{TH}(k)$ expected in the predictive horizon $k = 1,\dots,N$.

b. applying the above-defined predictive control problem and obtaining the sequences thus optimised of the optimisation variables $M_{REF}, P_{BATT}, P_H, \varepsilon$,

c. sending to the above-considered energy resources the control signals, thus calculated, relating at least to the adjustment (modulation) of the fuel cell $M_{REF}$ and to the power delivered by the electric battery $P_{BATT}$.

The control method of the invention provides an algorithm which can be adapted to any technology producer only by resetting the specifications of the modelling of the technical features of the generators and/or of the components thereof, thereby determining significant flexibility and scalability.

Moreover, being based on an optimisation which employs a predictive model defined for minimising a cost function, it implies a series of advantages, among which:

- improvement of battery and fuel cell duration, reducing potential stresses due to a management which produces frequent peak energy demands; the reduction of the unpredictability leads to a reduction of the intrinsic risks of generation and potential hot breakage of the system (fuel cell);
- increase of the self-used energy with progressive reduction of the exchanged energy due to the "machine learning" effect;
- economic optimisation with no human intervention;
- opportunity of managing big data relating to consumption patterns and production of the individual client-producers for building statistics useful for improving the effectiveness of the distributed systems.

However, it is understood that the invention is not limited to the specific embodiment illustrated above, which represents a non-limiting example of the scope of the invention, but that a number of variants lie within the reach of a person skilled in the field, without departing from the scope of the invention, as defined in the following claims.

**Claims**

1. Control method of a micro-generation plant of distributed energy, wherein the plant is installed in a local unit, is connected to a power network of an external supplier and comprises at least generator resources consisting of generators of electric and thermal energy, among which at least a co-generator in the form of a fuel cell and photovoltaic panels, and energy storage resources, among which at least an electric battery and a thermal accumulator (boiler), wherein the method comprises to

acquire status variables comprising at least an adjustment of said fuel cell $M(k)$, a loading status of said battery $S(k)$ and a status H(k) of said thermal accumulator,

chase a time sequence (k=1, ...N) of reference values comprising at least an electric output from photovoltaic panels $P_{FV}(k)$, an electric load $L_{EL}(k)$ and a thermal load ($L_{TH}(k)$) required by a user, through a predictive model defined for minimising a cost function which includes a total electric power $P_{EL}(k)$ and a total thermal power $P_{TH}(k)$ produced by said generators of electric and thermal energy so as to obtain a sequence of optimised variables, comprising at least adjustment/modulation of said fuel cell ($M_{REF}$), power delivered by said thermal accumulator $P_H(k)$ and a slack variable $\varepsilon(k)$ to be used as input variables for said fuel cell and said electric battery

and in which said status variables $M(k)$, $S(k)$, $H(k)$ are put in connection with the relative input variables $M_{REF}(k)$, $P_{BATT}(k)$ through discrete-time dynamic models defined as:

$$M(k+1) = e^{-\frac{T_s}{\tau}}M(k) + \left(1 - e^{-\frac{T_s}{\tau}}\right)M_{REF}(k)$$

$$S(k+1) = S(k) - k_s T_s P_{BATT}(k)$$

$$H(k+1) = e^{-l_H T_s}H(k) + \frac{k_H}{l_H}\left(e^{-l_H T_s} - 1\right)P_H(k)$$

where $T_s$ is a sampling time, $\tau$ is a time constant of said fuel cell, $k_S$ is a parameter of the loading and unloading dynamics of said electric battery, $k_H$ and $l_H$ are parameters of the dynamics of said thermal accumulator.

2. Method as claimed in 1, wherein said reference values to be chased furthermore comprise a charge status of said battery $S_{REF}$ and a status of said thermal accumulator $H_{REF}$.

3. Method as in 1 or 2, wherein said cost function comprises said total electric power and said total thermal power defined as:

$$P_{EL}(k) = \eta M(k) + P_{BATT}(k) + P_{FV}(k)$$

$$P_{TH}(k) = c\eta M(k) + P_H(k) + \varepsilon$$

respectively, where $\eta$ and $c$ are normalisation factors.

4. Control method of a micro-generation plant of distributed energy, wherein the plant is installed in a local unit, is connected to a power network of an outer supplier and comprises at least resources for the generation of electric and thermal energy, among which at least a co-generator in the form of a fuel cell and photovoltaic panels, and energy storage resources, among which at least an electric accumulator (battery) and a thermal accumulator (boiler), wherein the method comprises to

a. acquire a value of the loading status (S) of said electric accumulator, of the status (H) of said thermal accumulator and of an adjustment setting (M) of said fuel cell,
as well as an expected value of electric output ($P_{PV}$) from said photovoltaic panels, an expected value of the electric load ($L_{EL}$ and of the thermal load ($L_{TH}$) expected in a prediction horizon $k = 1,..., N$. which are considered chasing values;
b. based on such chasing values, determine the control solving a minimisation problem of a cost function subject to constraints, thus defined:

$$min \sum_{k=1}^{N} \left( q_{EL}\left(P_{EL}(k) - L_{EL}(k)\right)^2 + q_{TH}\left(P_{TH}(k) - L_{TH}(k)\right)^2 + q_S(S(k) - S_{REF}(k))^2 + q_H(H(k) - H_{REF}(k))^2 + q_\varepsilon \varepsilon(k)^2 \right)$$

s. t.

$$M(k+1) = e^{-\frac{T_s}{\tau}} M(k) + \left(1 - e^{-\frac{T_s}{\tau}}\right) M_{REF}(k)$$

$$S(k+1) = S(k) - k_s T_s P_{BATT}(k)$$

$$H(k+1) = e^{-l_H T_s} H(k) + \frac{k_H}{l_H}(e^{-l_H T_s} - 1)P_H(k)$$

$$P_{EL}(k) = \eta M(k) + P_{BATT}(k) + P_{FV}(k)$$

$$P_{TH}(k) = c\eta M(k) + P_H(k) + \varepsilon$$

$$P_H(k) = L_{TH}(k) - c\eta M(k)$$

$$P_{BATT,MIN} \leq P_{BATT}(k) \leq P_{BATT,MAX}$$

$$S_{MIN} \leq S(k) \leq S_{MAX}$$

$$P_{BATT}(k) \geq P_{FV}(k)$$

$$0 \leq H(k) \leq 1$$

$$M_{REF,MIN} \leq M_{REF}(k) \leq M_{REF,MAX}$$

$$P_{H,MIN} \leq P_H(k) \leq P_{H,MAX}$$

$$\forall k = 0, \ldots, N - 1.$$

where $k$ represents the discrete-time time index, $M_{REF}$ is a reference value of the adjustment/modulation of said fuel cell, $P_{BATT}$ is a reference value of the power delivered by said electric battery, $S_{REF}$ is a reference value of the loading status of said electric battery and $H_{REF}$ is a reference value of a status of said thermal accumulator, $P_H$ is a value of the power delivered by the thermal accumulator, $\varepsilon(k)$ is a slack variable, $T_s$ is the sampling time, $\tau$ is a time constant of said fuel cell, $k_S$ is a parameter of the loading and unloading dynamics of said electric battery, $k_H$ and $l_H$ are parameters of the dynamics of said thermal accumulator, $\eta$ and $c$ are normalisation factors, $M_{REF,MIN}$ and $M_{REF,MAX}$ are reference values of the adjustment, minimum and maximum, respectively, of said fuel cell, $S_{MIN}$ and $S_{MAX}$, are reference values of the loading status, minimum and maximum, respectively, of said electric battery, $P_{BATT,MIN}$ and $P_{BATT,MAX}$ are reference values of the instant power absorbed/delivered, minimum and maximum, respectively, by said electric battery, $P_{H,MIN}$ and $P_{H,MAX}$ are reference values of the instant power absorbed/delivered, minimum and maximum, respectively, by said thermal accumulator, $q_{EL}$, $q_{TH}$, $q_S$, $q_H$, $q_s$ are scalar quantities which define the relative weight of the various terms of said cost function,

thus obtaining sequences of optimisation variables comprising adjustment/modulation of said fuel cell ($M_{REF}$), power delivered by said electric battery ($P_{BATT}$), power delivered by said thermal accumulator $P_H(k)$ and a slack variable $\varepsilon(k)$;

c. delivering to the input of said generation resources of electric and thermal energy and energy storage resources, control signals corresponding to at least part of said optimisation variables, among which at least said adjustment/modulation of the fuel cell ($M_{REF}$) and power delivered by the electric battery ($P_{BATT}$).

**Fig 1. Fuel cell integrated with heating system**

**Fig. 2. Example of a performance map for a 500 Wel fuel cell**

**Fig. 3. Hybrid system of generation and accumulation**

**Fig. 4. Example of a sinusoidal model for a solar cell having Pp=0,5kW**

**Fig. 5. Example of a model based on PVGIS for a solar cell having Pp=0,5kW**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120072040 A
- US 20140012427 A
- US 20130190938 A

**Non-patent literature cited in the description**

- **M. HOUWING ; R. R. NEGENBORN ; P. W. HEIJNEN ; B. DE SCHUTTER ; H. HELLENDOORN.** Least-cost model predictive control of residential energy resources when applying $\mu$CHP. *Proceedings of Power Tech 2007, Lausanne, Switzerland,* July 2007, 6

- **MICHÈLE ARNOLD ; RUDY R. NEGENBORN ; GÖRAN ANDERSSON ; BART DE SCHUTTER.** *Model-Based Predictive Control Applied to Multi-Carrier Energy Systems, Presented at the IEEE PES General Meeting 2009, Calgary, Canada,* 2009
- **MICHÈLE ARNOLD ; GÖRAN ANDERSSON.** Model Predictive Control of Energy Storage including Uncertain Forecasts. *Presented at the 17th Power Systems Computation Conference, Stockholm, Sweden,* 2011